# EUROPEAN PATENT APPLICATION

(11) **EP 4 806 614 A1**
(43) Date of publication of application: **16.09.2026**
(21) Application number: 25163805.2
(22) Date of filing: 14.03.2025
(51) Int. Cl.: B29C 33/38, B33Y 80/00, A45D 40/16, B29L 31/00, B29C 33/40, B29C 33/42

(54) **METHOD OF PRODUCING A LIPSTICK MINE**

(71) Applicant: Weckerle GmbH, 82362 Weilheim (DE)
(72) Inventor: RANKL, Fabian, 82362 Weilheim (DE); LORY, Lukas, 82362 Weilheim (DE); BRUNNER, Martin, 82362 Weilheim (DE)
(74) Representative: Bardehle Pagenberg Partnerschaft mbB Patentanwälte Rechtsanwälte

(57) **Abstract**

A method for producing a lipstick mine is described. The method comprises printing a lipstick master based on a 3D-printing technique, wherein the lipstick master has at least partially an outer shape corresponding to the to be formed lipstick mine; casting a flexible mold having at least partially an inner shape that is a negative of the to be formed lipstick mine, wherein casting the flexible mold comprises: introducing the lipstick master at least partially into a hollow cavity, pouring elastic material into the hollow cavity, letting the elastic material solidify to form the flexible mold, and removing the lipstick master from the cavity; and forming the lipstick mine in the flexible mold, wherein the forming of the lipstick mine comprises: pouring at least one pasty mass into the flexible mold, letting the pasty mass solidify to form the lipstick mine, and removing the lipstick mine from the flexible mold. Further, a lipstick obtained by a corresponding method, a system for producing a corresponding lipstick, a method for generating a lipstick master for forming a flexible mold to form a lipstick mine, and a lipstick master obtained by a corresponding method are described.

## Description

### TECHNICAL FIELD

The present invention relates to the field of cosmetic product manufacturing, specifically focusing on the production of lipsticks.

### BACKGROUND

Traditionally, lipsticks are manufactured using industrial machines that execute a sequence of production steps, including the creation of flexible molds and the molding of lipstick mines within these molds.

A significant limitation of existing lipstick production machinery is the inflexibility in altering the design of the molded lipstick mine. Oftentimes, the lipstick's surface has a design made of a pattern of recesses or areas with different surface roughness to create a visually appealing surface design. The surface design may resemble a geometric pattern, a company's logo, a text, or a general surface roughness. Typically, changing the design requires modifications to the flexible mold production process. For instance, flexible molds are generally cast in hollow cavities where a lipstick master is introduced to impart a specific surface structure to the mold when elastic material is filled into the hollow cavity and solidifies around the lipstick master. Generally, the term lipstick master refers to an object that comprises the same shape as the lipstick mine that is to be produced but is made of a different material, usually the master is made out of metal. The lipstick master thereby mirrors the desired surface structure of the final lipstick product. The creation of such masters made from metal involves machining or laser working a metal element, these processes are time-consuming and not conducive to rapid design changes. Furthermore, the machinery to produce such metal masters are quite expensive and any design changes can only be implemented on a very large time scale.

Consequently, there is a demand for a more adaptable lipstick production process, one that allows manufacturers to swiftly alter surface designs without extensive lead time. Thereby making the complete process more efficient also in view of the costs involved.

### SUMMARY

The abovementioned need is addressed by the attached set of claims. The invention is defined by the independent claims. Preferred embodiments are set out in the dependent claims.

The invention provides a method that enhances the flexibility of lipstick manufacturing by incorporating 3D-printing technology to produce lipstick masters. This method involves several sequential steps.

In a first method step, a lipstick master is printed based on a 3D-printing technique. Generally, a 3D-printing process involves creating objects by adding material layer by layer based on a digital model. By using a 3D-printing technique for printing a lipstick master, a lipstick master is formed layer by layer directly from the input data of the printing process. Due to the high resolution of 3D-printers that have been developed recently, the shape and the surface structure of the lipstick master can be formed precisely by 3D-printing. According to the invention, the lipstick master has at least partially an outer shape corresponding to the to be formed lipstick mine.

In a second step, a flexible mold is casted. The casting step comprises introducing the lipstick master at least partially into a hollow cavity, pouring elastic material into the hollow cavity, letting the elastic material solidify to form the flexible mold, and removing the lipstick master from the cavity. The hollow cavity may be formed by molding tools of a lipstick production machine. The molding tools may define the hollow cavity, thereby specifying the outer shape of a flexible mold that is to be molded in the hollow cavity. In the most simply form, the hollow cavity is a cylinder, with one open end into which the master is introduced. However, also other forms are contemplated. By introducing the lipstick master into the hollow cavity and pouring elastic material into the hollow cavity, the elastic material will fill the hollow cavity around the lipstick master. When the elastic material solidified and the lipstick master is removed, the solidified material comprises a void in the location where the lipstick master was present during the solidification of the elastic material. This way, a flexible mold is created from the elastic material that comprises a void having a shape corresponding to a negative of the lipstick master and since the lipstick master's outer shape corresponds to the shape of the lipstick mine to be produced, the void in the flexible mold corresponds to the negative of the shape of the lipstick mine to be produced.

In a third step, the lipstick mine is formed in the flexible mold. The step of forming the lipstick mine in the flexible mold comprises pouring at least one pasty mass into the flexible mold, letting the at least one pasty mass solidify to form the lipstick mine, and removing the lipstick mine from the flexible mold. This step may also comprise that several pasty masses are introduced into the cavity, for example to form a multi-color lipstick mine.

Utilizing 3D-printing offers a rapid and cost-effective means to create lipstick masters and thereby allow a user to adapt a lipstick production machine rapidly to changes in the desired shape of the lipstick to be produced. Not only can the geometrical shape of the lipstick be changed - e.g. the size or thickness of the lipstick, whether the shape comprises a tapered or sloped portion, or the like - it is also possible to produce lipsticks with customized surface patterns, such as geometrical patterns, surface roughness, a (company) logo or general text. Manufacturers can design new patterns using computer-aided design (CAD) software, transfer the CAD data to a 3D printer, and produce the lipstick master without the need for machining tools or expensive laser systems that would otherwise be necessary to alter the surface of a conventional (i.e. metallic) lipstick master.

In the following preferred embodiments of the method according to the invention are described. These preferred embodiments additionally improve certain aspects of the claimed teaching. All or single aspects of these preferred embodiments may be combined unless explicitly stated to the contrary.

In a first preferred embodiment, the above described method may further comprise creating input data for the 3D-printing technique. This enables precise control over the design and customization of the lipstick master, enhancing flexibility in production. The step of creating the input data may comprise at least one of the following: scanning 2D surfaces, scanning 3D-surfaces, generating a computer aided 3D model. Any of these techniques allows the generating of accurate input data and improve the versatility and precision of the 3D-printing process.

In another preferred embodiment, the lipstick master may comprise a surface structure having one or more regions of different roughness and/or being formed by a one or more recesses, one or more protrusions, or a combination thereof. Providing a lipstick master having a particular surface structure enables the transfer of the surface structure from the outer surface of the lipstick master to the inner surface of the flexible mold and from there to the outer surface of the molded lipstick mine after solidification of one or more pasty masses. This allows for the creation of lipstick mines with varied surface textures, enhancing the aesthetic appeal of the final product. In some embodiments, the surface structure may form a logo of the manufacturer or some form of text, e.g. a marketing claim.

In another preferred embodiment, the lipstick master may be formed, by the 3D-printing technique, from at least one of the following a ceramic, a polymer, such as a photopolymer and/or a resin material, or a metal powder. The skilled person will be aware which of these materials may be suitable for usage with a particular 3D-printing technique. All of these materials are suitable for a lipstick master to use for forming a flexible mold. The skilled person may select a material based on availability of the material or a suitable 3D-printer and/or durability or quality requirements. For example, some materials may be particularly suitable for printing lipstick masters form high-resolution data, thereby creating lipstick masters comprising a particularly fine surface structure.

The invention supports various 3D-printing techniques, including photopolymerization, material extrusion, material jetting, powder bed fusion, and more, providing a comprehensive solution for flexible lipstick production. Hence, in some embodiments, the 3D-printing technique comprises one of the following: photopolymerization, material extrusion, material jetting, powder bed fusion, (PBF), powder fed 3D printing, laminated object manufacturing, (LOM), and binder jetting. This way, a wide range of 3D-printing techniques is provided, enhancing the flexibility and precision of the lipstick master production process.

Photopolymerization involves the use of light to solidify a liquid photopolymer resin. Photopolymerization technique may include digital light processing (DLP), stereolithography (SLA), continuous liquid interface production (CLIP), and dynamic interface printing (DIP). Photopolymerization provides high precision and smooth surface finishes, making it suitable for creating highly detailed lipstick masters. Without loss of generality, the photopolymerization technique of digital light processing (DLP) represents a preferred embodiment and will be explained in more detail: DLP is a 3D-printing technology that uses a digital light projector to cure photopolymer resin layer by layer. A building platform is placed upside down in a vat comprising the photopolymer. A light source (e.g. ultraviolet (UV) light) projects an image of a layer to be built onto the building platform, thereby causing the photopolymer to cure, thereby forming the layer. During this process, the building platform is moved up and down relative to the vat to enable that the light source projects the image to the correct location. This technique is known for its high resolution and speed, making it ideal for producing detailed and precise lipstick masters quickly. The use of DLP allows for intricate designs and smooth surface finishes, which are beneficial for creating high-quality molds and final products. In addition to its high-quality output and efficiency, DLP enables particularly fast production of lipstick masters.

Material extrusion involves extruding material through a nozzle to build objects layer by layer. Material extrusion techniques may include fused deposition modeling (FDM; which may also be referred to fused filament fabrication (FFF), fused pellet fabrication or fused particle fabrication), extrusion-based additive manufacturing of metal (EAM), ceramics (EAC), composite filament fabrication (CFF), and additive friction stir deposition (AFSD). Material extrusion is versatile and can use various materials, enhancing the flexibility of master production.

Powder Bed Fusion (PBF) involves fusing powder particles layer by layer using a heat source such as a laser or electron beam. PBF techniques may include electron beam melting (EBM), selective laser melting (SLM), selective heat sintering (SHS), selective laser sintering (SLS), direct metal laser sintering (DMLS), and binder jet 3D printing, which may also be referred to as powder bed and inkjet head 3D-printing (3DP). PBF provides high precision and material strength, suitable for durable lipstick masters.

Powder fed 3D-printing technique involves feeding powder material into a deposition head where it is melted and deposited layer by layer. Powder fed 3D-printing techniques may include directed energy deposition (DED), laser metal deposition (LMD), and laser cladding (EHLA). Powder fed 3D printing allows for high material deposition rates and strong final products.

Laminated object manufacturing (LOM) involves layering sheets of material and bonding them together, followed by cutting the desired shape. LOM techniques may be cost-effective and suitable for producing large, durable objects.

Binder jetting involves depositing a liquid binding agent onto a powder bed to form layers. Binder jetting may be fast and can use various materials, making it suitable for producing complex and detailed lipstick masters.

In another preferred embodiment, the lipstick master may comprise a means for being connected with a holding means. The holding means may be a portion of tools that form the hollow cavity for forming the flexible mold. The means for being connected to the holding means may be one of a tool reception, a tool drive, a recess having an inner threat, a protrusion having an outer threat. The tool drive may include an external square or a pin having an outer thread. The tool reception may include a hexagon socket or a recess having an inner thread. Further, the holding means may be of a type corresponding to the type of the means for being connected to the holding means. For example, if the means for being connected to the holding means is a tool reception, the holding means may be a corresponding tool. The lipstick master comprising a means for being connected to a holding means facilitates easy handling and positioning of the lipstick master within the cavity, thereby improving the efficiency of the mold formation process.

In another preferred embodiment, the elastic material that is poured into the hollow cavity may be a silicon. Using a silicon provides the benefit that the flexible mold is durable and capable of accurately replicating the lipstick master's design.

In another preferred embodiment, the method may further comprise finishing the lipstick master. For example, the lipstick master may be polished to some degree in order to remove burrs or ridges. Additionally or alternatively, the lipstick master may be coated with a thin layer of coating material. This may improve the forming of the flexible mold, because the lipstick master may be removed more easily from the solidified flexible mold. In order to ensure that the coating does not adversely affect the transfer of the surface structure from the lipstick master to the flexible mold, a thin layer is preferred.

Further, the abovementioned need is also fulfilled by a lipstick obtained by any of the aforementioned methods.

Further, the abovementioned need is also fulfilled by a system for producing a lipstick mine, the system comprising a means for printing a lipstick master, means for casting a flexible mold, and means for forming a lipstick mine. Any of the means of the system may comprise the features mentioned above in connection with the described method for producing a lipstick mine.

Further, the abovementioned need is also fulfilled by a method for generating a lipstick master for forming a flexible mold to form a lipstick mine, the method comprising printing a lipstick master based on a 3D-printing technique, wherein the lipstick master has at least partially an outer shape corresponding to the to be formed lipstick mine. The printing the lipstick master based on the 3D-printing technique may comprise any additional features mentioned above in connection with the corresponding feature of the described method for producing a lipstick mine.

Further, the abovementioned need is also fulfilled by lipstick master obtained by any of the methods described above.

### BRIEF DESCRIPTION OF THE DRAWINGS

The following description and the annexed figures set forth in detail certain illustrative aspects of the methods, systems and products described above. These aspects are indicative, however, of but a few of the various ways in which the principles of various embodiments can be employed and the described embodiments are intended to include all such aspects and their equivalent.

In the figures, like reference characters generally refer to the same parts throughout the different figures. The figures are not necessarily to scale. Instead, a general focus is put on an explanation of the universal principles of the invention.

In the following description, various embodiments of the invention are described with reference to the following figures:
- Fig. 1: Illustrates various views of a lipstick mine (a) in isolation and (b) to (d) in a lipstick container in different views.
- Fig. 2: Illustrates different forms of a lipstick master having a means for being connected to a holding means.
- Fig. 3: Illustrates different forms of lipstick mines and flexible molds each having a surface pattern that is transferred from the inner surface of the flexible mold to the outer surface of the lipstick mine upon forming the lipstick mine in the flexible mold.
- Fig. 4: Illustrates the casting process of the flexible mold, in detail (a), (b) depict assembly of tools for forming a hollow cavity and the introduction of the lipstick master into the hollow cavity and (c) depicts the flexible mold cast from the hollow cavity.
- Fig. 5: Illustrates the pouring and the solidification of the elastic material in the flexible mold.
- Fig. 6: Illustrates a flow diagram of a method according to the invention.

### DETAILED DESCRIPTION

The following detailed description refers to the accompanying figures that show, by way of illustration, specific details and embodiments in which the invention may be practiced.

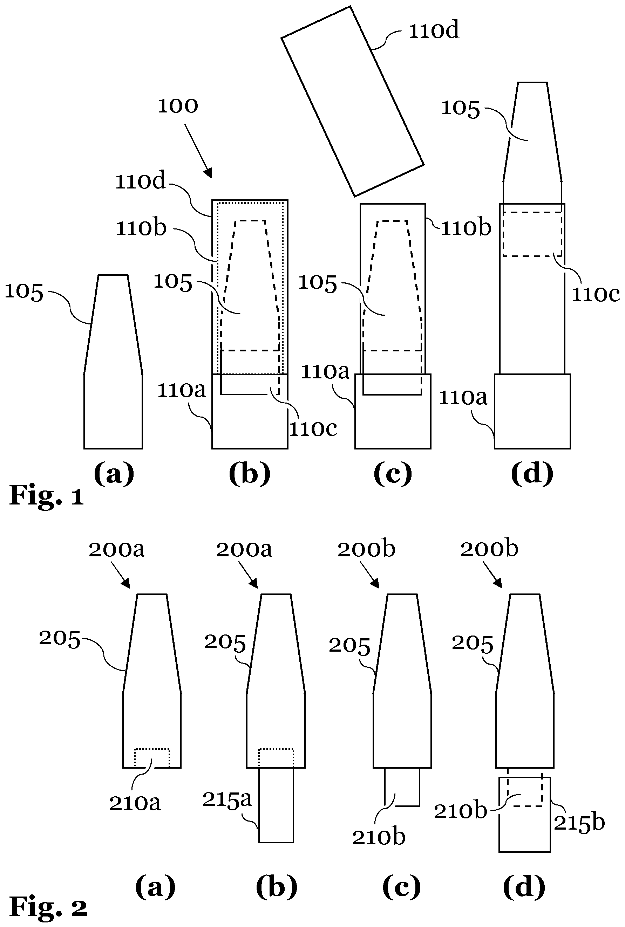

Figure 1 illustrates various views of a lipstick mine (a) in isolation and (b) to (d) in a lipstick container in different views.

Figure 1 (a) shows the standalone lipstick mine 105. The lipstick mine 105 is the product formed by letting one or more pasty masses of a cosmetic solidify within a flexible mold, and it has an outer shape that corresponds to the design imparted by a lipstick master. The lipstick mine 105 is depicted without any surrounding components, highlighting its shape and structure.

Figure 1 (b) to (d) show the lipstick mine 105 of Figure 1 (a) in a lipstick container 100. The lipstick container 100 comprises a bottom part, that comprises a first portion 110a, a second portion 110b, and a cage 110c for receiving the lipstick mine 105, as well as a top part 110d that may also be referred to as cap. The cage 110c is located within the second portion 110b. The first portion 110a and the second portion 110b are arranged concentrically adjacent to one another. Usually, the first portion 110a and the second portion 110b can be rotated relatively to one another, the rotation causing a position change of the cage 110c within the second portion 110b. The skilled person will be aware that several other types of lipstick containers are known in the art and that the lipstick mine produced with the method according to the invention can be used in any of these lipstick containers. The description of the specific lipstick container 100 in figure 100 is presented for illustrative purposes only in order to facilitate the understanding of the current invention.

Figure 2 illustrates different forms of a lipstick master having a means for being connected to a holding means.

Figure 2 (a), (b) shows a lipstick master 205 having a tool reception 210a configured to be connectable with a holding means 215a. The tool reception 210a may be a recess having an inner thread, which allows for secure attachment to the holding means 215a. The holding means 215a may be positioned to be inserted into the tool reception 210a, ensuring stable and precise positioning of the lipstick master 205 during the mold formation process. This configuration facilitates easy handling and accurate placement of the master within the mold components.

Figure 2 (c), (d) shows a lipstick master 205 with a tool drive 210b designed to be connectable with a holding means 215b. The tool drive 210b may be a protrusion having an outer thread, which allows for secure attachment to the holding means 215b. The holding means 215b may be positioned to be threaded onto the tool drive 210b, ensuring stable and precise positioning of the lipstick master 205 during the mold formation process.

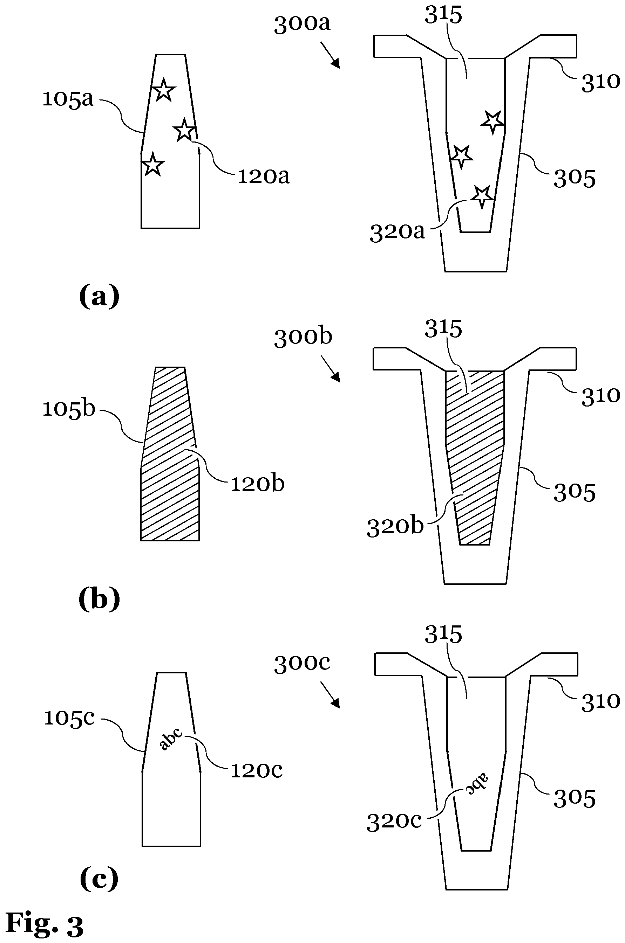

Figure 3 illustrates different forms of lipstick mines and flexible molds each having a surface pattern that is transferred from the inner surface of the flexible mold to the outer surface of the lipstick mine upon forming the lipstick mine in the flexible mold. Subfigures (a), (b) and (c) depict unique lipstick mine designs and the corresponding flexible molds that can be used to obtain such lipstick mines having the corresponding surface pattern.

Figure 3 (a) shows a lipstick mine 105a with a surface structure 120a featuring star-shaped recesses. The flexible mold 300a is formed to replicate this design. The flexible mold 300a comprises a body 305 made of elastic material and forms an inner void 315 that mirrors the outer shape of the lipstick mine 105a, including the star-shaped pattern 320a that is formed by star-shaped protrusions. When a pasty mass is filled into the void 315 and solidifies the star-shaped protrusions create star-shaped recesses on the surface of the solidified mass, i.e. the lipstick mine. The body 305 of the flexible mold provides structural stability, facilitating the pouring and solidification of the pasty mass during the lipstick mine formation process.

Figure 3 (b) shows a lipstick mine 105b with a surface structure 120b featuring diagonal stripes. The flexible mold 300b is formed to replicate this design. The flexible mold 300b comprises a body 305 made of elastic material and forms an inner void 315 that mirrors the outer shape of the lipstick mine 105b, including the diagonal stripes 320b. Similarly to what was described above for figure 3 (a), the diagonal stripes of the lipstick mine and the lipstick master may be formed by recesses and the diagonal stripes on the inner surface of the void of the flexible mold may be formed by protrusions and vice versa. The body 305 of the flexible mold provides structural stability, facilitating the pouring and solidification of the pasty mass during the lipstick mine formation process.

Figure 3 (c) shows a lipstick mine 105c with a surface structure 120c featuring engraved text ("abc"). The flexible mold 300c is formed to replicate this design. The flexible mold 300c comprises a body 305 made of elastic material and forms an inner void 315 that mirrors the outer shape of the lipstick mine 105c, including the text 320c that is formed by protrusions. The body 305 of the flexible mold provides structural stability, facilitating the pouring and solidification of the pasty mass during the lipstick mine formation process.

In order to achieve the desired surface structure, the lipstick master may have recesses, which create protrusions on the inner surface of the void 315 of the flexible mold when the mold is cast and the protrusions cause recesses on the surface of the solidified lipstick mine. Similarly, if the desired design of the lipstick comprises protrusions, the mold comprises recesses in the corresponding locations that are caused by protrusions on the surface of the lipstick master.

The different embodiment examples of lipstick mines 105a-c and flexible molds 300a-c depicted in figure 3 illustrate the invention's capability to produce lipstick mines with varied surface textures, providing manufacturers with the flexibility to create unique and customizable products.

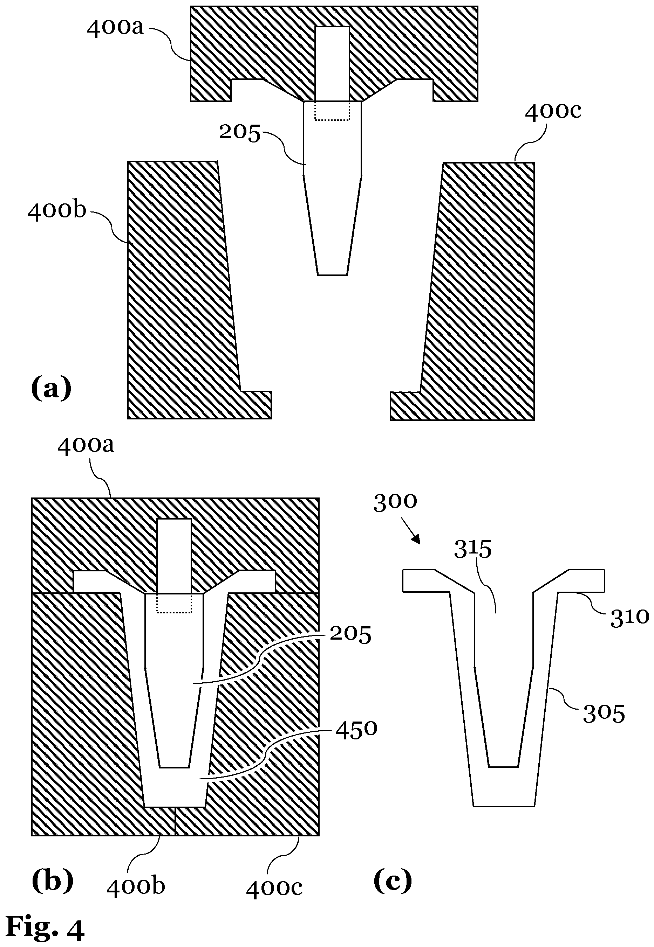

Figure 4 illustrates the casting process of the flexible mold, in detail (a), (b) depict assembly of tools for forming a hollow cavity and the introduction of the lipstick master into the hollow cavity and (c) depicts the flexible mold cast from the hollow cavity.

Figures 4 (a) and (b) show the forming of a hollow cavity 450 formed by tools 400a-c that are assembled adjacent to one another, thereby forming a hollow cavity 450, which can be filled by elastic material to form a flexible mold. The hollow cavity 450 has the form of the flexible mold 300 to be formed. Figure 4 (a) illustrates a state in which the tools 400a-c are not yet assembled and a holding means being connected to a lipstick master 205 is connected to one of the tools 400a. The holding means is connected to the tool 400a in a position that lies within the hollow cavity 450 when the tools 400a-c are assembled, thereby causing the lipstick master 205 to be introduced into the hollow cavity 450 upon assembling the tools 400a-c to form the hollow cavity 450. One of the tools 400a-c may comprise an opening or a recess (not shown) that forms a channel for introducing a feeding means for pouring the elastic material into the hollow cavity.

Figure 4 (c) shows a flexible mold 300 made of solidified elastic material. As can be seen, the flexible mold 300 has a shape that corresponds to the shape of the hollow cavity 450 in figure 4 (b). The flexible mold 300 comprises a body 305 made of solidified elastic material, e.g. a silicon. The body comprises a void 315 that represents the negative (or inverse) of the shape of the lipstick master 205. This way, when at least one pasty mass is poured into the void 315 of the flexible mold 300, the at least one pasty mass, after solidification, will have the shape of the lipstick master 205, i.e. the desired shape of the lipstick to be produced. Any particular surface structure (see figure 3) that is transferred from the lipstick master 205 to the inner surface of the void 315 of the flexible mold 300 will then upon solidification of the at least one pasty mass in the flexible mold 300 be transferred from the inner surface of the void 315 to the outer surface of the solidified lipstick.

Further, the flexible mold 300 comprises a means 310 for being connected to a mold holder of a lipstick manufacturing machine. The means 310 may, in some examples, be an annular protrusion extending radially from the body 305 in an upper portion of the body 305.

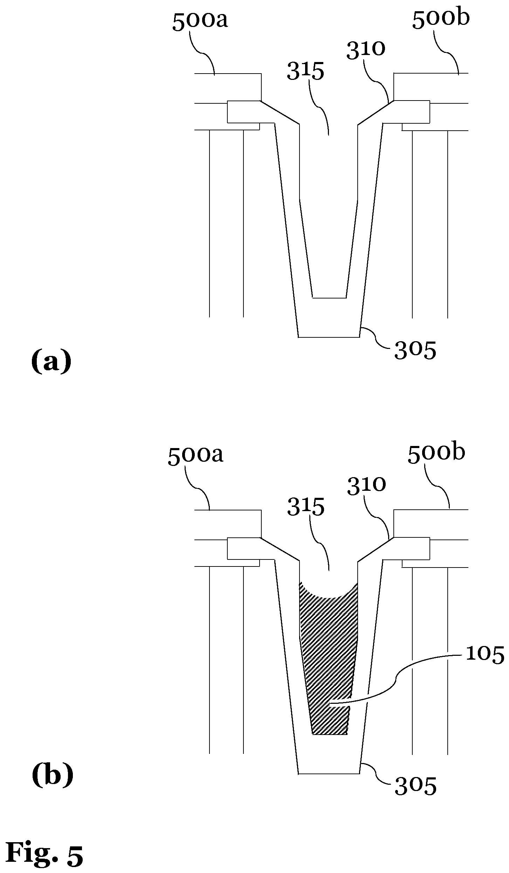

Figure 5 illustrates the pouring and the solidification of the elastic material in the flexible mold. Figure 5 (a) depicts the flexible mold 300 as described in figure 4 (c) being held by a mold holder. The mold holder may comprise several portions 500a, 500b that hold the flexible mold 300. In the example illustrated in figure 5, this is achieved by receiving the annular protrusion of the means 310. Figure 5 (b) depicts the flexible mold 300 held by a mold holder and having its void 315 filled with at least one pasty mass by a pouring means (not shown) to produce a lipstick mine 105 that can be removed from the flexible mold 300 after it has solidified.

After the pasty mass solidified, a lipstick container may be placed in the void of the flexible mold, the lipstick container thereby receiving a portion of the solidified lipstick mine. Alternatively, a portion of a lipstick container may be placed in the void of the flexible mold prior to pouring the at least one pasty mass into the void of the mold. In this case, the pasty mass is poured through a hole in the bottom of the lipstick container.

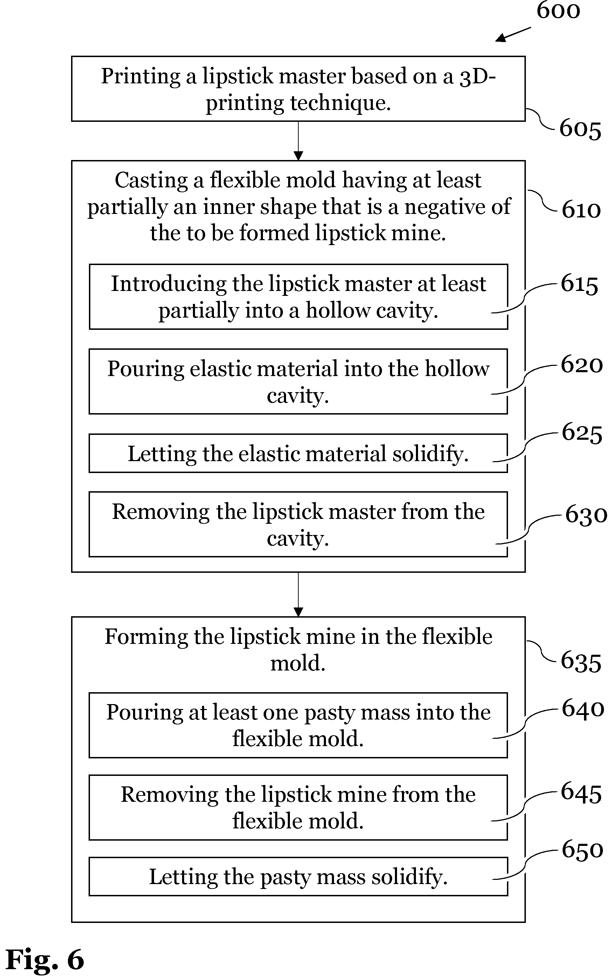

Figure 6 illustrates a flow diagram of a method 600 for producing a lipstick mine according to the invention.

In step 605, a lipstick master is printed based on a 3D-printing technique. This step may involve creating a lipstick master using advanced 3D-printing techniques. The lipstick master has at least partially an outer shape corresponding to the desired lipstick mine. Techniques such as photopolymerization, material extrusion, powder bed fusion (PBF), powder fed 3D printing, laminated object manufacturing (LOM), and binder jetting may be employed. This step ensures rapid and cost-effective production of customized lipstick masters with intricate designs, enhancing flexibility and reducing lead time.

In some cases, step 605 may include a post-processing of the lipstick master. The post-processing may comprise polishing the lipstick master or coating the lipstick master.

At step 610, a flexible mold having at least partially an inner shape that is a negative of the to be formed lipstick mine is casted. This step involves forming a flexible mold that accurately replicates the outer shape of the lipstick mine. The mold has an inner shape that is a negative of the lipstick mine, ensuring precise replication.

The casting the flexible mold comprises four further steps. In step 615, the lipstick master is introduced at least partially into a hollow cavity. The lipstick master is positioned within a hollow cavity formed by tools as explained in connection with figure 4. This step ensures accurate positioning of the master within the cavity, facilitating uniform mold formation.

At step 620, elastic material is poured into the hollow cavity. Elastic material, preferably silicon, is poured into the hollow cavity surrounding the lipstick master. This step allows for the creation of a flexible mold that can easily accommodate different designs.

At step 625, the elastic material is let solidify. By solidification, the elastic material forms the flexible mold. This step ensures that the mold retains the desired shape and structural integrity.

At step 630, the lipstick master is removed from the cavity. The lipstick master is removed from the cavity, leaving behind a flexible mold with an inner shape that mirrors the outer shape of the master. This step enables the reuse of the master for subsequent mold formations, enhancing efficiency.

At step 635, the lipstick mine is formed in the flexible mold. This step ensures the lipstick mine is accurately shaped according to the mold's design.

The forming the lipstick mine in the flexible mold comprises three further steps. At step 640, at least one pasty mass is poured into the flexible mold. This step facilitates the formation of the lipstick mine with the desired consistency and texture. Additionally, the flexible mold may be preheated prior to the pouring of the at least one pasty mass into the flexible mold.

At step 645, the lipstick mine is removed from the flexible mold. This step allows for easy extraction of the final product, enhancing production efficiency.

At step 650, the pasty mass is allowed to solidify, forming the lipstick mine. This step ensures the lipstick mine retains its shape and structural integrity. Extraction may be improved by applying a vacuum to the outer surface of the flexible mold, thus causing a release between the solidified lipstick mine and the flexible mold. During this process, the mold may at the beginning of applying the vacuum at least partially be held by holding means, which give the form stability. This allows for example that at first only that portion of the flexible mold, which is not held by the holding means, is expanded by the vacuum. Hence also only the lipstick mine is partially separated from the flexible mold. This allows to grab the lipstick mine at this portion for subsequent extraction or already put a container on this portion of the exposed lipstick mine. Thereafter, the holding means may release the held portion of the flexible mold such that the entire flexible mold is expanded by the applied vacuum. When the entire flexible mold is expanded, the lipstick mine can be extracted from the flexible mold.

Overall, Figure 6 provides a method for producing a lipstick mine, highlighting the interaction between various components and the technical effects achieved at each stage. The use of advanced 3D-printing techniques for master creation, combined with the casting of flexible molds and the formation of lipstick mines, ensures high-quality, customizable products with efficient production processes.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the spirit and scope of the appended claims.

## Claims

1. A method (600) for producing a lipstick mine (105), comprising:
printing (605) a lipstick master (205) based on a 3D-printing technique,
wherein the lipstick master (205) has at least partially an outer shape corresponding to the to be formed lipstick mine (105);
casting (610) a flexible mold (300, 300a-c) having at least partially an inner shape that is a negative of the to be formed lipstick mine (105), wherein
casting the flexible mold (300, 300a-c) comprises:
introducing (615) the lipstick master (205) at least partially into a hollow cavity (450),
pouring (620) elastic material into the hollow cavity (450),
letting the elastic material solidify (625) to form the flexible mold (300, 300a-c), and
removing (630) the lipstick master (205) from the cavity (450); and forming (635) the lipstick mine (105) in the flexible mold (300, 300a-c), wherein the forming of the lipstick mine (105) comprises:
pouring (640) at least one pasty mass into the flexible mold (300, 300a-c),
letting the pasty mass solidify (645) to form the lipstick mine (105), and
removing (650) the lipstick mine (105) from the flexible mold (300, 300a-c).

2. The method according to claim 1 further comprising:
creating input data for the 3D-printing technique.

3. The method of claim 2, wherein creating the input data comprises at least one of the following:
scanning 2D surfaces;
scanning 3D-surfaces;
generating a computer aided 3D model.

4. The method according to any of the preceding claims, wherein the lipstick master (205) comprises a surface structure (120a-c) having one or more regions of different roughness and/or being formed by one or more recesses, one or more protrusions, or a combination thereof.

5. The method according to any of the preceding claims, wherein the lipstick master (205) is formed, by the 3D-printing technique, from at least one of the following: a ceramic, a resin material, or a metal powder.

6. The method according to any of the preceding claims, wherein the 3D-printing technique comprises one of the following:
photopolymerization, including one of digital light processing, DLP, stereolithography, SLA, continuous liquid interface production, CLIP, dynamic interface printing, DIP;
material extrusion, including one of fused deposition modelling, FDM, extrusion based additive manufacturing of metal, EAM, extrusion based additive manufacturing of ceramics, EAC, composite filament fabrication, CFF, additive friction stir deposition, AFSD;
material jetting;
powder bed fusion, PBF, including one of electron beam melting, EBM, selective laser melting, SLM, selective heat sintering, SHS, selective laser sintering, SLS, direct metal laser sintering, DMLS, binder jet 3D printing;
powder fed 3D printing, including one of directed energy deposition, DED, laser metal deposition, LMD, and laser cladding, EHLA;
laminated object manufacturing, LOM; and
binder jetting.

7. The method according to any of the preceding claims, wherein the lipstick master (205) comprises a means (210a, 210b) for being connected with a holding means.

8. The method according to claim 7, wherein the means (210a, 210b) for being connected with the holding means is one of a tool reception, a tool drive, a recess having an inner threat, or a protrusion having an outer threat.

9. The method according to any of the preceding claims, wherein the elastic material that is poured into the hollow cavity (450) is a silicon.

10. A lipstick obtained by a method according to any of the claims 1 to 9.

11. A system for producing a lipstick mine (105), comprising:
means for printing a lipstick master (205) based on a 3D-printing technique, wherein the lipstick master (205) has at least partially an outer shape corresponding to the to be formed lipstick mine (105);
means for casting a flexible mold (300, 300a-c) having at least partially an inner shape that is a negative of the to be formed lipstick mine (105), wherein casting the flexible mold (300, 300a-c) comprises:
introducing the lipstick master (205) at least partially into a hollow cavity (450),
pouring elastic material into the hollow cavity (450),
letting the elastic material solidify to form the flexible mold (300, 300a-c), and
removing the lipstick master (205) from the cavity (450); and means for forming the lipstick mine (105) in the flexible mold (300, 300a-c), wherein the forming of the lipstick mine (105) comprises:
pouring at least one pasty mass into the flexible mold (300, 300a-c),
letting the pasty mass solidify to form the lipstick mine (105), and
removing the lipstick mine (105) from the flexible mold (300, 300a-c).

12. The system according to claim 11, wherein the means for printing employ at least one of the following 3D-printing techniques:
photopolymerization, including one of digital light processing, DLP, stereolithography, SLA, continuous liquid interface production, CLIP, dynamic interface printing, DIP;
material extrusion, including one of fused deposition modelling, FDM, extrusion based additive manufacturing of metal, EAM, extrusion based additive manufacturing of ceramics, EAC, composite filament fabrication, CFF, additive friction stir deposition, AFSD;
material jetting;
powder bed fusion, PBF, including one of electron beam melting, EBM, selective laser melting, SLM, selective heat sintering, SHS, selective laser sintering, SLS, direct metal laser sintering, DMLS, binder jet 3D printing;
powder fed 3D printing, including one of directed energy deposition, DED, laser metal deposition, LMD, and laser cladding, EHLA;
laminated object manufacturing, LOM; and
binder jetting.

13. A method for generating a lipstick master (205) for forming a flexible mold (300, 300a-c) to form a lipstick mine (105), the method comprising:
printing a lipstick master (205) based on a 3D-printing technique, wherein the lipstick master (205) has at least partially an outer shape corresponding to the to be formed lipstick mine (105).

14. The method according to claim 13, wherein the 3D-printing technique comprises one of the following:
photopolymerization, including one of digital light processing, DLP, stereolithography, SLA, continuous liquid interface production, CLIP, dynamic interface printing, DIP;
material extrusion, including one of fused deposition modelling, FDM, extrusion based additive manufacturing of metal, EAM, extrusion based additive manufacturing of ceramics, EAC, composite filament fabrication, CFF, additive friction stir deposition, AFSD;
material jetting;
powder bed fusion, PBF, including one of electron beam melting, EBM, selective laser melting, SLM, selective heat sintering, SHS, selective laser sintering, SLS, direct metal laser sintering, DMLS, binder jet 3D printing;
powder fed 3D printing, including one of directed energy deposition, DED, laser metal deposition, LMD, and laser cladding, EHLA;
laminated object manufacturing, LOM; and
binder jetting.

15. A lipstick master (205) obtained by a method according to any of the claims 13 or 14.
